(19) **Europäisches Patentamt / European Patent Office / Office européen des brevets**

(11) **EP 3 040 586 A1**

(12) **EUROPEAN PATENT APPLICATION**

(43) Date of publication:
06.07.2016 Bulletin 2016/27

(51) Int Cl.:
*F16H 61/465* (2010.01)  *B60W 30/188* (2012.01)

(21) Application number: 14425159.2

(22) Date of filing: 29.12.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Dana Rexroth Transmission Systems S.r.l.**
**38062 Arco (Trento) (IT)**

(72) Inventors:
• **Mueller, Matthias**
**89129 Langenau (DE)**
• **Herrmann, Ronny**
**38062 Arco (TN) (IT)**

(74) Representative: **Bonatto, Marco et al**
**Barzanò & Zanardo Milano S.p.A.**
**Via Borgonuovo, 10**
**20121 Milano (IT)**

(54) **Power split transmission, machine provided with such transmission and method for operating such transmission**

(57)     A power split transmission (1) comprising a first and a second power branch, a summing gear mechanism (9), wherein the second power branch is a mechanical transmission branch comprising a plurality of clutches (15A, 15B, 15C), each of which allowing to select a different transmission ratio of the second power branch. The transmission further comprises a control unit (13) programmed for detecting the rotation speed (N3, N11) of the primary power input (11) or of the final power output (3) and controlling the overall transmission ratio ($N_3/N_{11}$) of the power split transmission (1) by coupling or uncoupling of the clutches (15A, 15B, 15C) depending on the variation over the time ($\Delta Var/\Delta T$) of such rotation speed (N3, N11).

Fig. 1

**Description**

<u>Field of the invention</u>

The present invention relates to a power split transmission of the kind comprising a a first power branch with a continuously variable transmission and a second power branch comprising a plurality of clutches allowing to vary stepwise the overall transmission ratio.
Such power split transmission can be applied to earth moving and forestry vehicles such as wheel loaders or skidders. The invention further relates to a machine provided with such split power transmission and to a method for operating such transmission.

<u>Background art</u>

Many earth moving and forestry vehicles, such as wheel loaders or skidders, are provided with power split transmissions. According to the most recent trends, this kind of transmission is often equipped with a hydrostatic continuous variator comprising in its turn a positive displacement motor coupled with a positive displacement pump. The displacement volume of the motor and/or the pump can be continuously varied so as to change continuously the transmission ratio of the whole power split transmission, as described for example in the publications US 3 714 845, US2012/174704A1, DE102007037107A1 or DE102007037664A1.
In comparison with a torque converter comprising a turbine and a rotodynamic pump, a hydrostatic continuous variator on the one hand entails a much higher efficiency and smaller wasted power in the form of thermal power loss; on the other hand it is not able to self-adjust its output torque in case of suddenly varying loads so as to prevent non-optimal operation or misfunctionments of the internal combustion engine driving the transmission.
Therefore several control systems and methods have been developed for coping with sudden variations of the load applied at the output shaft of a power split transmission. Nevertheless in some cases the known control systems and methods do not provide a satisfactory behaviour. For instance, when a wheel-loader enters a pile the load applied at the output shaft driving both the vehicle wheels and its bucket or other implements increases so sharply that the know control systems are not able to reduce quickly enough the transmission ratio, the vehicle wheels are disconnected from the internal combustion engine for fractions of seconds but nevertheless for a time long enough to allow the vehicle to coast out of the pile backward. Such behaviour is not accepted by the operators, since prevents the kinetic energy of the vehicle from being used to load the bucket.
The present invention is therefore directed to overcoming one or more problems of the prior art set forth above, and in particular to provide a power split transmission and a control method thereof for preventing engine stall in case of sudden variations of the load with respect to the known transmissions.

<u>Summary of the invention</u>

In a first aspect, the present invention is directed to a power split transmission having the features according to claim 1.
In a second aspect, the present invention is directed to a machine having the features according to claim 12.
In a third aspect, the present invention is directed to a method for operating a power split transmission having the features according to claim 13.
In a fourth aspect, the present invention is directed to a computer program having the features according to claim 14.
The advantages achievable through the present invention will be more apparent, to the person skilled in the field, from the following detailed description of an example of a particular non limiting embodiment, provided with reference to the following schematic figures.

<u>List of Figures</u>

Figure 1 shows a first mechanical and fluidic scheme of a power split transmission according to a particular embodiment of the invention;
Figure 2 shows a diagram of the speed ranges and the transmission ratio of the power split transmission of Figure 1;
Figure 3 shows the graphs of the rotational engine speed and of the condition of connection and disconnection of the clutches of the power split transmission of Figure 1 during a sudden load condition;
Figure 4 shows a second mechanical and fluidic scheme of the power split transmission of Figure 1, more adherent to a possible real construction.

Detailed description

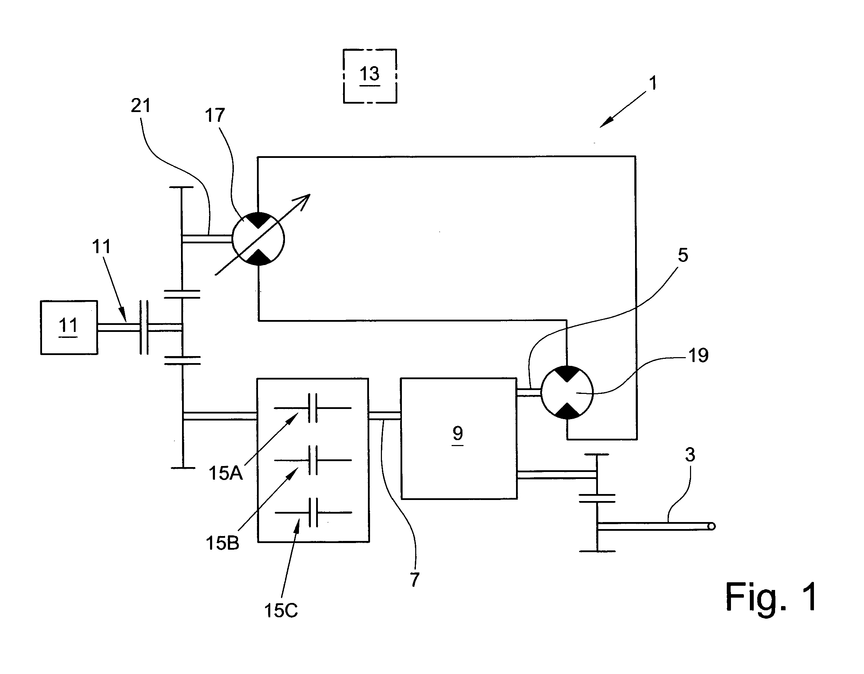

Figures 1-4 relate to a power split transmission, referred to with the overall reference 1, according to a particular embodiment of the invention.

The power split transmission 1 can be mounted for example on earth moving and forestry vehicles, such as wheel loaders or skidders so as to mechanically connect the output shaft of an internal combustion engine (ICE) M to the final power output 3 of the transmission 1, for example the output shaft 3 driving the wheels or tracks on which the machines runs and other implements, if any, such as for instance mechanical arms holding a bucket, a winch or other tools.

The transmission 1 comprises:

- a first power branch and a second power branch, the first power branch comprising a continuously variable transmission, each of the first and the second power branch being provided with a respective power output 5, 7;
- a summing gear mechanism 9 comprising a first power input, which is connected to the output 5 of the first power branch, a second power input which is connected to the output 7 of the second power branch, and a final power output 3;
- a primary power input 11 driven by the ICE and driving in parallel both the first and the second power branch;
- a control unit 13 programmed or however arranged for controlling the transmission ratio of the second power branch.

The control unit preferably comprises an electronic processing unit, such as a microprocessor.

The second power branch is a mechanical transmission branch comprising for examples toothed wheels and gears having fixed transmission ratios; the second power branch comprises a plurality of clutches 15A, 15B, 15C, each of which allowing to select a different transmission ratio of the second power branch.

Each clutch 15A, 15B, 15C can be for example a multiple disc clutch.

The first power branch preferably comprises a positive displacement hydrostatic rotary pump 17 and a positive displacement hydrostatic rotary motor 19. The pump 17 is driven by the ICE for example through a shaft 21 driven by the primary power input 11; the latter can also comprise a rotating shaft. The fluidic outlet port of the pump 17 feeds the motor 19, and the fluidic outlet of the motor 19 feeds the inlet of the pump 17. The pump 17 and/or the motor 19 provides a continuously variable displacement.

The summing gear mechanism 9 can comprise for example an epicyclic gear train comprising in its turn one or more sun gears and one or more planet gears (not shown).

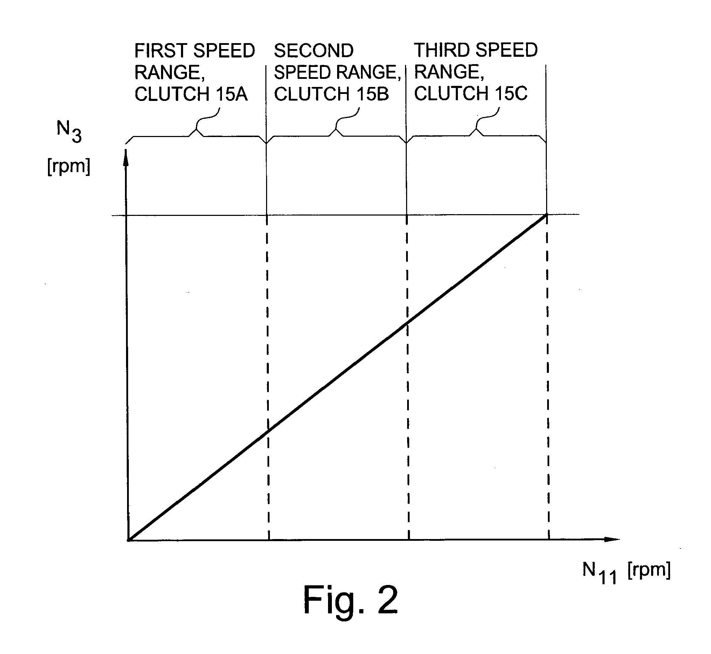

The summing gear mechanism 9 gives rise to different transmission ratios $N_3/N_{15A}$, $N_3N_{15B}$, $N_3/N_{15C}$ correlating the rotation speed of the shaft 3 and the rotational speeds $N_{15A}$, $N_{15B}$, $N_{15C}$ of the output shafts of the clutches 15A, 15B, 15C respectively. Consequently by connecting and disconnecting the clutches 15A, 15B, 15C it is possible to select the different speed ranges of the output shaft 3. The transmission ratios $N_3/N_{15A}$, $N_3/N_{15B}$, $N_3/N_{15C}$ and $N_5/N_{21}$, the latter correlating the rotation speeds of the output shafts 5 and 21, are chosen so as to allow the overall transmission ratio $N_3/N_{11}$ of the whole power split transmission 1, correlating the rotation speeds of the shafts 3 and 11, be continuously varied over the three neighbouring speed ranges associated to the clutches 15A, 15B, 15C, as shown in Figure 2. The control unit 13 or another logic unit automatically connects and disconnects the clutches 15A, 15B and 15C so as to continuously vary the overall transmission ratio $N_3/N_{11}$ according to the diagram of Figure 2.

According to an aspect of the invention, the control unit 13 is programmed or however arranged for carrying out an overload procedure comprising the following steps:

S1) detecting at least one predetermined monitored variable Var such as any of the following:

- the rotation- $N_{11}$ or linear speed of the primary power input or of the final power output $N_3$;
- the torque or force supplied by the primary power input 11 to the first and second power branches, or supplied by the final power output;
- a suitable pressure in a hydraulic power circuit, if present, indicating the load applied to the primary power input or the final power output 3; and

S2) controlling the overall transmission ratio $N_3/N_{11}$ of the power split transmission 1 by coupling or uncoupling of the clutches 15A, 15B, 15C depending on the variation $\Delta$Var of the at least one monitored variable over a predetermined time interval $\Delta$T, that is depending on the ratio $\Delta$Var $/\Delta$T.

The ratio $\Delta$Var $/\Delta$T is a numerical approximation of the time derivative, or gradient, of the monitored variable Var and in the present description will be conventionally referred to as "time derivative" or "gradient".

Advantageously the ratio $\Delta$Var $/\Delta$T is calculated or detected with reference to a time interval -or sampling step- $\Delta$T comprised between 1 and 500 milliseconds, preferably comprised between 5 and 100 milliseconds, more preferably comprised between 5-50 milliseconds and yet more preferably comprised between 5-15 milliseconds. $\Delta t$ - 10 milliseconds proved to be a particularly effective choice. These choices of $\Delta T$ allow the control unit 13 to react promptly in case of suddenly increasing load on the shaft 3.

In order to filter undesired noise, the control unit triggers the coupling or uncoupling of the clutches 15A, 15B, 15C depending on several values of the ratio $\Delta Var / \Delta T$, for example on about 5-10 subsequent values of that ratio.

In a preferred embodiment, the monitored variable Var is the rotational speed of the internal combustion engine M, that is the number of turns $N_{11}$ of the shaft 11.

The number of turns $N_{11}$ of an ICE varies between the low idle point $N_{11IdleLow}$ and a maximum value $N_{11max}$. During the operation of the heavy equipment machine it is desired to maintain the speed $N_{11}$ as close as possible to the optimum value $N_{11opt}$ corresponding to the condition of maximum efficiency of the ICE, and the control system 13 is arranged to operate consequently.

In case of a sudden load the variation $\Delta N_{11}$ is assumed to be negative, corresponding to a decreasing rotational speed $N_{11}$ over the time. If different variables are considered, such as the load torque applied at the engine output shaft 11, their increases and positive variations $\Delta Var$ over the time can be assumed as indications of misfunctionment conditions.

In other words the control unit 13, when detecting a sudden and sharp decrease over the time of the speed $N_{11}$ of the IEC or of other monitored variables Var, it reacts so as to remove the system as soon as possible from the overload conditions and immediately disconnects the clutch 15A, 15B or 15C which was currently engaging the summing gear mechanism 9.

Preferably for disconnecting the clutch 15A, 15B or 15C which was engaged before the overload conditions, the control unit 13 checks not only whether the values of the time variation of one or more monitored variables Var1, Var2 ... $Var_i$ reached predetermined thresholds, but also whether the monitored variables Var1, Var2 ... $Var_i$ reached other predetermined thresholds; the control unit 13 triggers the overload procedure and disconnects the engaged clutch 15A, 15B, 15C if both of the following conditions are present:

1) $|\Delta Var / \Delta T| \geq$ Threshold 1; AND
2) $\Delta Var / \Delta T < 0$ or $\Delta Var / \Delta T > 0$ depending on which condition indicates a sudden load
3) $(Var(t) - V_{arMinimum}) = \Delta'Var <$ or $>$ Threshold 2.

wherein the expression $|\Delta Var / \Delta T|$ indicates the absolute value of the time derivative of var and $\Delta'Var$ is the difference between the monitored variable Var(t) at a time t and the minimum value $V_{arMinimum}$ that Var can assume over the actual operative field of the transmission 1 and of the internal combustion engine.

Preferably in relation 1) is Threshold1 $\geq (0,1*Max\Delta Var)$ per second, wherein $Max\Delta Var$ is the difference between the maximum and the minimum values that the variable Var can assume over the actual operative field of the transmission 1 and of the internal combustion engine.

If the monitored variable Var is the rotational speed $N_{11}$ or $(N_{11} - N_{11Idle Low})$ of the engine M, it is $Max\Delta Var = (N_{11max} - N_{11IdleLow})$.

More preferably in relation 1) is Threshold1 $\geq (0,2*Max\Delta Var)$ per second. Threshold2 in the condition 3) can range for example between $0,1* Max\Delta Var - 1,4* Max\Delta Var$ or between $0,1* Max\Delta Var - 0,5* Max\Delta Var$ according to the variable Var in question.

If the monitored variable Var is the rotation engine speed $N_{11}$, necessary conditions to be reached for the control unit 13 to trigger the disconnection of the clutches 15A, 15B, 15B are preferably that

$$1bis) \qquad |\Delta N_{11} / \Delta T| \geq \text{Threshold 1}$$

AND

$$2bis) \qquad \Delta N_{11} / \Delta T < 0$$

AND

$$3bis) \qquad (N_{11} - N_{11IdleLow}) \leq \text{Threshold2}$$

That is the absolute value of the numeric time derivative of the engine rotation speed is equal to or greater than a predetermined first threshold, also referred to as Threshold 1, but such time derivative has a negative value, meaning that the engine rotation speed is sharply decreasing.

Advantageously the Threshold 1 in the relation 1bis) is equal to or greater than about 100 rpm/s, preferably is equal to or greater than about 200 rpm/s and more preferably equal to or greater than 300 rpm/s.

Preferably the Threshold2 in the relation 3bis) is equal to or greater than zero, more preferably is equal to or greater than $0,1*(N_{11max} - N_{11IdleLow})$ and even more preferably equal to or greater than $0,2*(N_{11max} - N_{11IdleLow})$.

The Threshold2 in the relation 3bis) can range for example between 200-1000 rpm. Furthermore Threshold2 in the relation 3bis) can be also equal to or greater than $0,5*(N_{11max} - N_{11IdleLow})$

The above mentioned choices of Threshold2 prevent the system from reacting in case of irrelevant events and disturbances in use-cases different from pile working. Advantageously the control unit 13 is programmed or however arranged for uncoupling completely the clutch -for example 15A- which was engaged before the arise of the sudden load before coupling any of the other clutches -for example 15B, 15C or triggering the coupling of the other clutches 15B, 15C so as to avoid overlapping a gradual disconnection of a clutch with the gradual connection of another clutch.

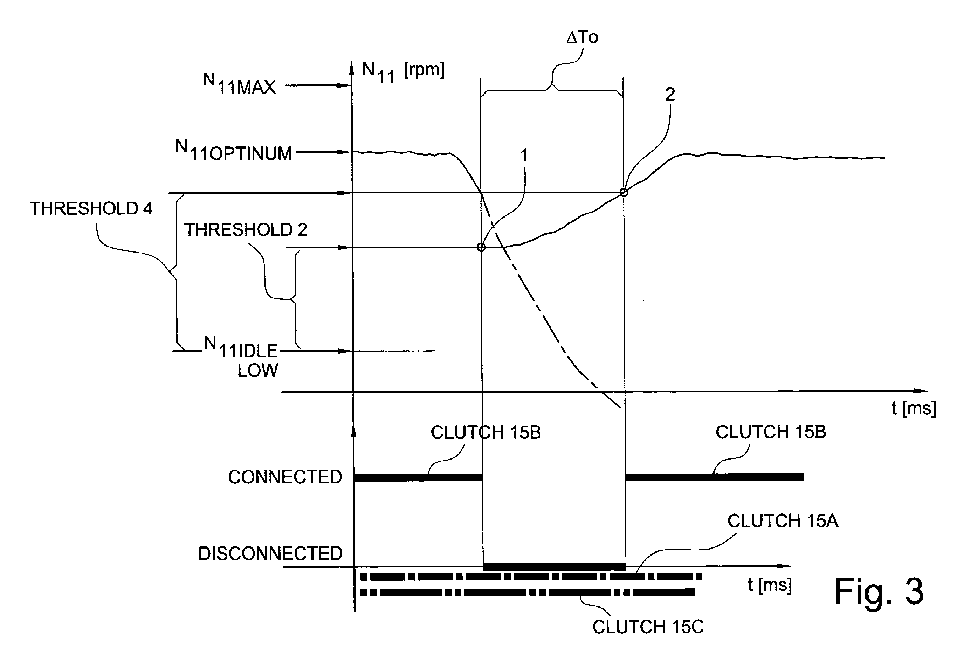

This way for a very short time $\Delta T0$ such as a few milliseconds, all the clutches 15A, 15B and 15C are simultaneously disconnected from the summing gear mechanism 9, allowing the ICE to recover quickly a sufficiently high rotational speed $N_{11}$, as shown in Figure 3.

Preferably the control unit 13 controls the reconnection of the same clutch which was disengaged last, or of other clutches, depending on whether the following conditions are reached:

$$4) \qquad |\Delta Var / \Delta T| \geq Threshold\ 3;$$

AND

$$5) \qquad \Delta Var / \Delta T > 0\ or\ \Delta Var / \Delta T < 0$$

depending on whether a positive or negative time derivative of the monitored variable Var indicates the conclusion of the overload conditions

$$6) \qquad \Delta Var < or > Threshold\ 4.$$

If the monitored variable Var is the rotation engine speed $N_{11}$, necessary conditions for the control unit 13 to trigger the reconnection of one of the clutches 15A, 15B, 15B are preferably that

$$4bis) \qquad |\Delta N_{11} / \Delta T| \geq Threshold\ 3$$

AND

$$5bis) \qquad \Delta N_{11} / \Delta T > 0$$

$$6bis) \qquad (N_{11} - N_{IdleLow}) \geq Threshold4$$

That is the absolute value of the numeric time derivative of the engine rotation speed is equal to or greater than a predetermined Threshold 1 and such time derivative has a negative value, meaning that the engine rotation speed is sharply decreasing.

Advantageously the Threshold 3 in the relation 4bis) is equal to or greater than about 200 rpm/s.

Threshold3 can have the same value of Threshold 1.

Threshold4 is preferably greater than Threshold2, for instance the following relation can hold

$$7) \qquad Threshold4 = Threshold3 + 100\ rpm$$

However Threshold4 can have the same value as of Threshold2.

More generally, a condition to be complied with by the control system 13 is that the gradient $\Delta Va / \Delta T'$ at the time $T'$ of triggering the recoupling of one clutch 15A, 15B, 15C must have a sign opposite to that of the gradient $\Delta Var / \Delta T$ at the time $T$ of triggering the uncoupling of all the clutches 15A, 15B,15C.

The conditions 4)-6bis) and sufficiently high values of the Thresholds 1-4 such as according to relation 7) cause the internal combustion engine M to engage again the summing gear mechanism 9 when a sufficiently high rotational speed $N_{11}$ of the engine M has been recovered, preventing in a more efficient and save way subsequent stalls of the engine M or drops of the engine speed $N_{11}$.

When the conditions 4)-6bis) are met again, the control unit 13 chooses which one of the clutches 15A, 15B or 15C has to be connected again according to the usual operation criteria of the split transmission 1 and shown in Figure 2, namely connecting the clutch corresponding to the speed range in which the rotational speed of the engine M lies, when the reconnection takes place, depending on the values of N3 and N11.

In another aspect, the invention relates to a method for controlling a power split transmission as previously described.

In a further aspect, the invention relates to a computer program for controlling a power split transmission according to the method previously described; such computer progam can be loaded for example as software or firmware on the control unit 13.

The operation of the power split transmission 1 is further described with reference to a specific and non-limiting numerical example, in which the transmission is mounted in a wheel loader and its parameters are so set:

$N_{11max} = N_{11Opt} = 1800$ rpm
$N_{11IdleLow} = 900$ rpm
Threshold2 = 600 rpm
Threshold4 = 500 rpm

Just before the wheel loader enters a pile of material such as sand or gravel, the clutch 15B is connected, all the other clutches 15A, 15C are disconnected; the transmission operates in the second velocity range. Just after having entered the pile, the torque applied on the shaft 3 suddenly increases almost in an impulsive way.

Since the hydrostatic pump 17 and the hydrostatic motor 19 is not able to reduce its swept volume enough quickly, the impulsive load is transmitted to the shaft 11 of the internal combustion engine M. The engine speed $N_{11}$ starts to decrease rapidly until is $N_{11} = 1200$ rpm.

At this point the control unit 13 detects a sudden load fulfilling the conditions 2)-4bis) and triggers the disconnection of the clutch 15B too, so that all the clutches 15A, 15B, 15C are disconnected and the load is not transmitted to the shaft 11. The engine M starts turning idle; if the operator keeps the drive pedal pressed, the engine speed $N_{11}$ recovers quite quickly and quite soon reaches again 1300 rpm = $N_{11IdleLow}$ + Threshold4.

The conditions 6)-8bis) are met again, however $N_3$ decreased so much to enter the first speed range, therefore the control unit 13 triggers the reconnection only of the first clutch 15A so as to decrease the overall transmission ratio $N_3/N_{11}$ while the hydraulic pump 17 still adjusts the transmission ratio of the first power branch $N_5/N_{21}$ and consequently the overall ratio $N_3/N_{11}$ so as to further reduce the latter, if necessary.

Turning back to the description of the invention in general, the control criteria expressed by the relations 1), 2), 1bis), 2bis) allow to detect quite early a sudden increase of load such as when a wheel loader fits its bucket in a pile of sand, gravel, pebbles or earth, and allow the clutches 15A, 15B, 15C be disconnected much earlier than the known control systems. Thanks to this early disconnection, the output engine shaft 11 is promptly unloaded when its speed drop is still relatively small -for example at point (1) of Figure 3- and a very short time interval $\Delta T0$ is sufficient for the engine M to recover such small speed drop before the conditions for reconnecting one of the clutches 15A, 15B, 15C are met again -for example at point (2) of Figure 3. Thanks to the previous teachings it has been possible to observe time intervals $\Delta T0$ of about 350 milliseconds, so short to prevent the driver of the wheel loader to perceive the disconnection and reconnection of the clutches.

So short time intervals $\Delta T0$ of complete disconnection of all the clutches 15A, 15B, 15C furthermore:

- prevent a wheel loader from coasting out of a pile of incoherent material such as sand, gravel, stones of earth after having tried to fit its bucket in it;
- prevent stalls of the internal combustion engine M;
- allow the engine speed drop to be kept within acceptable limits, and reduces such drop in comparison with the known control systems;
- make a fast torque response dynamic possible after reengagement of the clutches, clearly depending on the operator commands, for example on whether he/she is pressing the drive pedal.

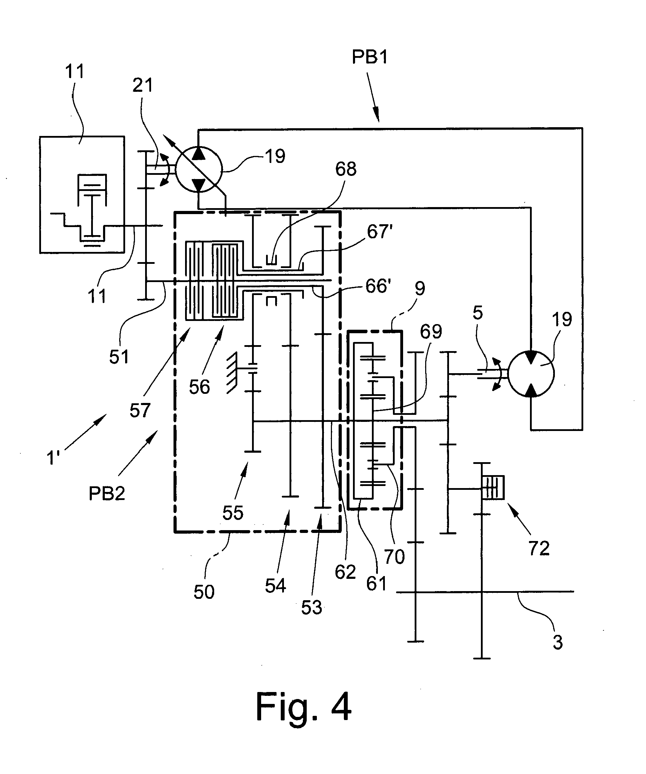

Figure 4 shows a second mechanical and fluidic scheme of the power split transmission of Figure 1, more adherent to a possible real construction.

Such construction is substantially similar to that described in the publication US 2014/0174704A1, to which reference is made concerning the detailed description of the mechanical and hydraulic construction and operation of the transmission. The first power branch PB1 of the transmission 1 comprises the hydrostatic pump 19 and the hydrostatic motor 19. The second power branch PB2 comprises a dual clutch transmission 50 comprising in its turn a first clutch 56 and a second clutch 57. The dual clutch transmission 50 can be connected permanently to the drive engine M on the input side, or reversibly connected to and disconnected from it through a clutch not shown. The input shaft 51 of the dual clutch transmission 50 is connected to the driven shaft 11 of the drive engine M via a second transmission stage.

On the output side, an output shaft 62 of the dual clutch transmission 50 is connected to the summing gear mechanism 9. The summing gear mechanism 9 therefore has two inputs which are connected permanently to the hydraulic motor 19 on one side and are connected permanently to the output shaft 62 of the dual clutch transmission 50 on the other side.

For providing different transmission ratios for the at least two power branched driving ranges to be realized, at least one first transmission stage 53 and one second transmission stage 54 are configured in the dual clutch transmission 50. Both transmission stages 53, 54 are connected permanently to the output shaft 62 of the dual clutch transmission 50. In order to connect the transmission stage to be engaged in each case to an input shaft 51 of the dual clutch transmission 50, the first clutch 56 and the second clutch 57 are provided. The two clutches 56, 57 are connected to in each case one clutch shaft 66', 67'.

A further transmission stage 55 can be present provided for driving in reverse, in addition to the two transmission stages 53, 54. In order to change between the second transmission stage 54 and the transmission stage for driving in reverse 55, a selector sleeve 68 is provided, by way of which in each case one idler gear of the transmission stage for driving in reverse 55 or of the second transmission stage 54 can be connected in a rotationally fixed manner to the second clutch shaft 67'. As a result of the arrangement of the selector sleeve 68 between the second transmission stage 54 and the transmission stage 55 for driving in reverse, a change can be made without actuation of the selector sleeve 68 between forward driving and driving in reverse in the respective first two driving ranges. In contrast, the first transmission stage 53 is connected permanently to the first clutch shaft 66'. In order to change the transmission ratio of the dual clutch transmission 50, in each case one of the clutches 56, is opened in the case of a rotationally fixed connection of the first transmission stage 53 to the first clutch shaft 66', whereas the other clutch is closed. However, both clutches 56, 57 are to be opened at the same time in the dual clutch transmission 50. A purely hydrostatic first driving range can therefore be realized.

The summing gear mechanism 9 can be configured as a single planetary gear mechanism. Here, single planetary gear mechanism means that there is merely one gear set. Said gear set contains a sun gear 69 as first transmission element, a spider 70 as second transmission element, and an internal gear 61 as third transmission element. The internal gear 61 is connected permanently in a rotationally fixed manner to the output shaft 62 of the dual clutch transmission 50. The sun gear 69 is connected permanently in a rotationally fixed manner to the output shaft 5 of the hydraulic motor 19. The spider is connected permanently in a rotationally fixed manner to the driven shaft 3 of the drive system 1.

In addition, the output shaft 5 can likewise be connected to the driven shaft in a rotationally fixed manner via a third clutch 72.. It can be seen in the exemplary embodiment shown that the output shaft 5 of the hydraulic motor 19 acts on the sun gear 69 via a transmission stage. Furthermore, a further transmission stage is provided between the sun gear shaft and the input side of the third clutch 72. The third clutch 72 interacts on the output side in turn with the driven shaft via a further transmission stage.

Shortly, assuming that the first 15A, the second 15B and the third clutch 15C of Figure 1 correspond respectively to the lower, intermediate and higher speed range of the output shaft 3, the transmission 1' of Figure 4 operates

- in the lower speed range when the clutches 56 and 57 are open and the clutch 72 is closed, corresponding to the connection of the clutch 15A of Figure 1;
- in the intermediate speed range when the clutch 56 is closed and the clutches 57 and 72 are open, corresponding to the connection of the clutch 15B of Figure 1;
- in the higher speed range when the clutches 72 and 56 are open and the clutch 57 is closed, corresponding to the connection of the clutch 15C of Figure 1.

The embodiments previously described can undergo several changes and variations yet without departing from the scope of the present invention. For example the pressure in a suitable hydrostatic power circuit can be chosen as monitored variable Var, indicating the variation of the load applied at the output shaft 3 or at the shaft 11, for example the hydrostatic power circuit driving the wheels or tracks on which the vehicle runs. In addition or replacement of the monitored variables Var mentioned above, depending on the particular case the control unit 13 can monitor further variables for detecting situations entailing a sudden increase of the load applied to the ICE or for determining when a clutch 15A, 15B, 15C has to be reengaged after having disconnected all of them at the end of the period ΔT0.

Such further variables can be for example the position of the drive pedal or the vehicle speed and its variations over the time: in fact the speed of a wheel loader entering a pile of incoherent material to be loaded in its bucket usually ranges between 5-10 km/h. The second power branch can be provided not only with three clutches 15A, 15B, 15C but also with a different number of clutches.

Instead of a hydraulic pump coupled to a hydraulic motor, the first power branch can be provided with a different continuous hydraulic variator or with yet further kinds of continuous variators, such as a mechanical or electrical continuous variator. Furthermore all details are replaceable with technically equivalent elements. For example the used materials, as well as their dimensions, can be any according to the technical needs. It is to be intended that an expression such as "A comprises B, C, D" also comprises and describes the - particular case wherein "A consists of B, C, D" . The examples and lists of the possible variations of the present application are to be intended as non exhaustive.

**Claims**

1.    A power split transmission (1), comprising:

- a first power branch and a second power branch, the first power branch comprising a continuously variable transmission, each of the first and the second power branch being provided with a respective power output (5, 7);
- a summing gear mechanism (9) comprising a first power input, which is connected to the output (5) of the first power branch, a second power input which is connected to the output (7) of the second power branch, and a final power output (3), wherein the second power branch is a mechanical transmission branch comprising a plurality of clutches (15A, 15B, 15C), each of which allowing to select a different transmission ratio of the second power branch;
- a primary power input (11) driving in parallel both the first and the second power branch;
- a control unit (13) programmed or however arranged for carrying out the following steps:

S1) detecting at least one predetermined monitored variable (Var, $N_{11}$) such as any of the following:

- the rotation or linear speed of the primary power input (11) or of the final power output (3);
- the torque or force supplied by the primary power input (11) to the first and second power branches, or supplied by the final power output (3); and

S2) controlling the overall transmission ratio ($N_3/N_{11}$) of the power split transmission (1) by coupling or uncoupling of the clutches (15A, 15B, 15C) depending on the variation over the time ($\Delta$Var/ $\Delta$T) of the at least one monitored variable.

2.    Transmission according to claim 1, wherein the step S2) comprises one or more of the following steps:

- determining the ratio $\Delta$Var/ $\Delta$T, wherein $\Delta$Var is the variation of the at least one monitored variable (Var) occurring over a predetermined time interval $\Delta$T;
- determining a numeric approximation of the time derivative of the monitored variable (Var).

3.    Transmission according to claim 1, wherein the step S2) comprises the step of triggering the connection or disconnection of all or part of the clutches (15A, 15B, 15C) if the absolute value of the time derivative of the at least one monitored variable (|$\Delta$Var/$\Delta$T|) reaches or exceeds a first threshold (Thresholdl), which first threshold being equal to or greater than 0,1 times the maximum range of variation (Max$\Delta$Var) of the at least one monitored variable (Var) in normal operative conditions.

4.    Transmission according to claim 3, wherein the at least one monitored variable (Var) is the difference between the rotational speed ($N_{11}$) and the rotational speed at the low idle point ($N_{11LowIdle}$) of a engine (M) driving said primary power input (11), the connection or disconnection of one or more of the clutches (15A, 15B, 15C) is triggered if the absolute value of the time derivative (|$\Delta N_{11}/\Delta$T|) of the rotational speed ($N_{11}$) reaches or exceeds a first threshold (Threshold1), which first threshold is equal to or greater than 100 rpm per second.

5.    Transmission according to any of claims 2-4, wherein in step S2) the ratio $\Delta$Va/ $\Delta$T is determined with reference to a time interval $\Delta$T comprised between 5-500 milliseconds, and preferably comprised between 5-15 milliseconds.

6.    Transmission according to claim 1, wherein the control unit (13) is programmed or however arranged for triggering the uncoupling of all or part of the clutches (15A, 15B, 15C) depending on whether the at least one monitored variable (Var; $N_{11}$ - $N_{11IdleLow}$) is equal to or lower than a predetermined second threshold (Threshold2).

7. Transmission according to claim 6, wherein the monitored variable is the difference the difference ($N_{11}$ - $N_{11LowIdle}$) between the rotational speed and the rotational speed at the low idle point of a engine (M) driving said primary power input (11), and the second threshold (Threshold2) complies with one or more of the following conditions:

   - the second threshold (Threshold2) is equal to or greater than zero;
   - the second threshold (Threshold2) is equal to or greater than 100 rpm;
   - the second threshold (Threshold2) is equal to or greater than 300 rpm;
   - the second threshold (Threshold2) is equal to or greater than 0,1 times the difference ($N_{11max}$ - $N_{11IdleLow}$) between the maximum and the minimum values that the between rotational speed of the engine ($N_{11}$) can assume over the actual operative field of the transmission.

8. Transmission according to claim 1, wherein the control unit (13) is programmed or however arranged for completely uncoupling all the clutches (15A, 15B, 15C) before triggering the subsequent coupling of one of the clutches (15A, 15B, 15C).

9. Transmission according to claim 2, wherein the at least one monitored variable (Var) is the difference ($N_{11}$ - $N_{11LowIdle}$) between the rotational speed and the rotational speed at the low idle point of a engine (M) driving said primary power input (11), and the control unit (13) is programmed or however arranged for carrying out the following steps after all clutches (15A, 15B, 15C) have been disconnected:

   - triggering the connection of one of the clutches (15A, 15B, 15C) if the ratio $\Delta(N_{11})/ \Delta T$ of increase of such difference of rotational speeds ($N_{11}$ - $N_{11IdleLow}$) reaches or exceeds a third threshold (Threshold3) and/or if such difference ($N_{11}$ - $N_{11IdleLow}$) is equal to or greater than a fourth threshold (Threshold4).

10. Transmission according to claim 9, wherein the absolute value of the third threshold (Threshold3) complies with one or more of the following conditions:

   - the third threshold (Threshold3) is equal to or greater than 200 rpm per second;
   - the third threshold (Threshold3) is equal to the first threshold (Threshold1).

11. Transmission according to claim 9, wherein the fourth threshold (Threshold4) is equal to or greater than the second threshold (Threshold2).

12. Machine such as a heavy equipment machine, an earth moving machine, a wheel loader, a track loader, a bulldozer, an excavator, a pavement grinding machine for grinding for example asphalt pavements and roads, a mining truck, a skidder, said machine being provided with a power split transmission (1) according to any of the preceding claims.

13. Method for operating a power split transmission (1), the transmission comprising:

   - a first power branch with a continuously variable transmission and a second power branch, each of the first and the second power branch being provided with a respective power output (5, 7);
   - a summing gear mechanism (9) comprising a first power input, which is connected to the output (5) of the first power branch, a second power input which is connected to the output (7) of the second power branch, and a final power output (3), wherein the second power branch is a mechanical transmission branch comprising a plurality of clutches (15A, 15B, 15C), each of which allowing to select a different transmission ratio of the second power branch;
   - a primary power input (11) driving in parallel both the first and the second power branch;

   the method comprising the following steps:

   S1) detecting at least one predetermined monitored variable (Var, $N_{11}$) such as any of the following:

   - the rotation or linear speed of the primary power input (11) or of the final power output (3);
   - the torque or force supplied by the primary power input (11) to the first and second power branches, or supplied by the final power output (3); and

S2) controlling the overall transmission ratio ($N_3/N_{11}$) of the power split transmission (1) by coupling or uncoupling of the clutches (15A, 15B, 15C) depending on the variation over the time ($\Delta Var/\Delta T$) of the at least one monitored variable.

14. Computer program arranged for carrying out the method according to claim 13 when run by a logic unit.

Fig. 1

EP 3 040 586 A1

FIRST SPEED
RANGE,
CLUTCH 15A

SECOND
SPEED RANGE,
CLUTCH 15B

THIRD SPEED
RANGE,
CLUTCH 15C

$N_3$

[rpm]

$N_{11}$ [rpm]

## Fig. 2

Fig. 3

Fig. 4

Europäisches
Patentamt

European
Patent Office

Office européen
des brevets

# EUROPEAN SEARCH REPORT

Application Number

EP 14 42 5159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/125147 A1 (LUTGEN F PAUL [US]) 3 July 2003 (2003-07-03) * paragraph [0039]; figure 3 * ----- | 1,2,5, 12-14 | INV. F16H61/465 B60W30/188 |
| Y | WO 2013/110707 A1 (SPICER OFF HIGHWAY BELGIUM NV [BE]) 1 August 2013 (2013-08-01) * claim 1 * ----- | 1,2,5, 12-14 | |
| A | US 2014/095035 A1 (HOFF BRIAN D [US] ET AL) 3 April 2014 (2014-04-03) * figure 6 * ----- | 1,13,14 | |
| A | JP H05 280616 A (-) 26 October 1993 (1993-10-26) * abstract * ----- | 1,13,14 | |
| | | | TECHNICAL FIELDS SEARCHED (IPC) F16H B60W |

The present search report has been drawn up for all claims

| Place of search | Date of completion of the search | Examiner |
|---|---|---|
| The Hague | 15 June 2015 | Goeman, Frits |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 42 5159

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2015

| Patent document cited in search report | | Publication date | Patent family member(s) | | Publication date |
|---|---|---|---|---|---|
| US 2003125147 | A1 | 03-07-2003 | DE 10257404 A1<br>US 2003125147 A1 | | 17-07-2003<br>03-07-2003 |
| WO 2013110707 | A1 | 01-08-2013 | EP 2807404 A1<br>US 2015075146 A1<br>WO 2013110707 A1 | | 03-12-2014<br>19-03-2015<br>01-08-2013 |
| US 2014095035 | A1 | 03-04-2014 | NONE | | |
| JP H05280616 | A | 26-10-1993 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3714845 A
- US 2012174704 A1
- DE 102007037107 A1
- DE 102007037664 A1
- US 20140174704 A1